Europäisches Patentamt

**European Patent Office**

**Office européen des brevets**

(19)

(11) Publication number: **0 030 950**
**B1**

(12)                    EUROPEAN PATENT SPECIFICATION

(45) Date of publication of patent specification: **09.05.84**        (51) Int. Cl.³: **H 04 N 9/27**

(21) Application number: **80901171.1**

(22) Date of filing: **10.06.80**

(86) International application number:
**PCT/NL80/00021**

(87) International publication number:
**WO 81/00182 22.01.81 Gazette 81/2**

(54) **POWER SUPPLY CIRCUIT.**

(30) Priority: **27.06.79 NL 7904989**

(43) Date of pubLication of application:
**01.07.81 Bulletin 81/26**

(45) Publication of the grant of the patent:
**09.05.84 Bulletin 84/19**

(84) Designated Contracting States:
**CH DE FR GB LI NL SE**

(56) References cited:
**US - A - 3 720 781**
**US - A - 3 863 097**

(73) Proprietor: **HOLLANDSE SIGNAALAPPARATEN B.V.**
**Zuidelijke Havenweg 40 P.O. Box 42**
**NL-7550 GD Hengelo (NL)**

(72) Inventor: **PLOUMEN, Hubert Jozef**
**Kerkedennen 30**
**7621-ED Borne (NL)**

(74) Representative: **ten Cate, Walter Enno Maria, Mr.Drs. et al,**
**Patent Department Hollandse Signaalapparaten B.V. P.O. Box 42**
**NL-7550 GD Hengelo (NL)**

Courier Press, Leamington Spa, England.

## Description

The invention relates to a power supply circuit for applying a rapidly varying high voltage to a penetron-type cathode ray tube for a colour display system, comprising a first voltage generator for supplying a constant high voltage to the anode, a second voltage generator for producing a voltage varying in magnitude with the different colours, which voltage after being modulated with the video signals to be displayed is applied to the cathode of the tube, a first transforming unit having first transforming means for converting the video signals defined with respect to a first reference voltage into video signals defined with respect to the voltage varying in magnitude with the different colours and functioning as second reference voltage; a second transmitting unit for converting a supply voltage defined with respect to the first reference voltage into a supply voltage defined with respect to the second reference voltage; and a supply unit for deriving from the supply voltage defined with respect to the second reference voltage the supply voltages needed to process the video signals defined with respect to the second reference voltage and to display said video signals on the cathode ray tube.

To enhance the legibility of a display, a multicolour tube is employed. In order that a high positioning accuracy be obtained, while considering the relatively short working distance with such a display system, it is undesirable to use a shadow-mask tube for this purpose; a penetron tube gives considerably better results. The penetron tube has two different phosphor layers. With a certain voltage applied to the tube, the electrons excite mainly the first phosphor layer, while with a certain higher voltage applied to the tube the electrons are sufficiently accelerated to penetrate the barrier layer between the two phosphor layers and excite the second phosphor layer. The two voltages applied to the tube light up the screen in a certain colour; with intermediate voltages mixed colours are obtainable.

A power supply circuit for such a penetron-type cathode ray tube as described in the opening paragraph is known from U.S. patent specifications 3,720,781 and 3,863,097. However, this circuit shows the disadvantage that it is practically impossible to convert the video signal with both sufficient accuracy and a very short rise time, as the bandwidth of the signal to be converted is too large. The purpose of the invention is to diminish this disadvantage. According to the invention the power supply circuit is characterised in that the first transforming unit comprises second transforming means for converting a square-wave voltage, being determinative of the start and the end of displays in a certain colour and being defined with respect to the first reference voltage, into a square-wave voltage defined with respect to the second reference voltage, and further comprises a switch for passing to the cathode either the second reference voltage or, depending on said latter square-wave voltage, the video signals defined with respect to the second reference voltage.

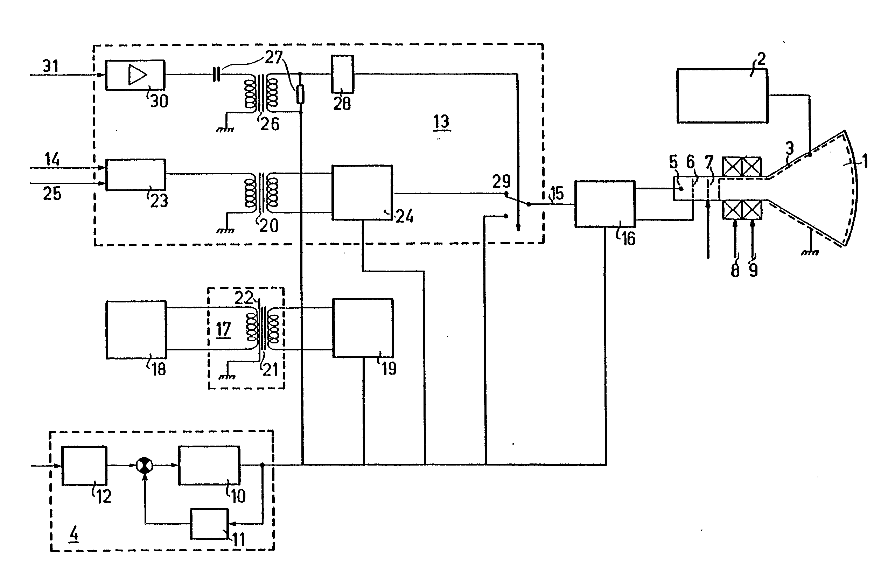

The invention will now be described with reference to the accompanying figure which shows a block diagram of the power supply circuit.

In this figure the numeral 1 represents a penetron-type cathode ray tube for a colour display system. A first voltage generator 2 supplies anode 3 of this cathode ray tube with a constant high voltage. Furthermore a second voltage generator 4 produces a voltage varying in magnitude with the different colours, which voltage after being modulated with the video signals to be displayed is applied to cathode 5 of the cathode ray tube. The voltages to be applied to grids 6 and 7 must be defined, as will appear later, with respect to the voltage supplied by the second voltage generator 4. The figure further shows terminals 8 and 9 (which are beside the point) for the focussing and deflection voltages.

The second voltage generator 4 comprises a voltage regulator 10 with a negative feedback from its output to its input via control amplifier 11. The input voltage of regulator 10 is supplied by a digital-analogue converter 12. This converter receives a computer-supplied digital code of the colour to be displayed.

To modulate the voltage supplied by the second voltage generator 4 with the video signals, this voltage must be made a floating reference for these video signals. The power supply circuit thereto comprises a first transforming unit 13. In this unit the video signals, supplied via line 14 and defined with respect to a first reference voltage, preferably "earth", are converted into video signals defined with respect to a second reference voltage, that is the voltage supplied by the second voltage generator 4, which voltage varies in magnitude with the different colours. The video signals defined with respect to the second reference voltage, i.e. the video signals modulated on the voltage varying in magnitude with the different colours are applied to cathode 5 of cathode ray tube via line 15 and amplifier 16. Like grids 6 and 7 of the cathode ray tube, amplifier 16 must be fed with supply voltages defined with respect to the second reference voltage. A second transforming unit 17 is thereto incorporated. In transforming unit 17 a supply voltage, produced by voltage source 18 and defined with respect to the first reference voltage, is converted into a supply voltage defined with respect to the second reference voltage. The latter voltage is applied to supply unit 19, which produces supply voltages defined with respect to the second reference voltage and required for amplifier 16, grids 6 and 7 and for the supply of various circuits of the first transforming unit; these circuits will be dealt with later.

The conversion in the first and second transforming units is in principle effected by inductive couplings (transformers) 20 and 21, respectively. However, the difficulty arising is that the capacitance between the primary and the secondary windings of the inductive coupling 21 through the lines carrying the second reference voltage, together with the capacitance between the primary and the secondary windings of inductive coupling 20, disturbs the video signals, such that a distorted picture on the screen is obtained. These disturbing effects are however eliminated by two measures. First, a shield 22 having the potential of the first reference voltage is inserted between the primary and secondary windings of inductive coupling 22, so that the capacitance between these windings is reduced substantially to zero. Second, the first transforming unit *13* is provided with first transforming means comprising an amplitude modulator 23, the inductive coupling 20 and an amplitude demodulator 24. The video signals are first modulated on a carrier frequency applied via line 25 and, after conversion by the inductive coupling, are again demodulated. When the signals are converted in a higher frequency range, a smaller transformer can be employed, permitting the conversion to be realised with a lower impedance, which considerably reduces the disturbing effect of the capacitance between the primary and secondary windings of the coupling 20.

With the display of a video signal a voltage jump is impressed on line 14. The rise time of this jump is relatively long to keep the video signal to be converted in the first transforming unit in a narrow band, but for the display on the screen the rise time should be very short. However, it is practically impossible to convert the video signal with both sufficient accuracy and a very short rise time; the bandwidth of the signal to be converted would then be too large. For this reason the first transforming unit *13* is provided with second transforming means comprising a second inductive coupling 26, a differentiating network 27 incorporating this coupling, a bistable circuit 28 connected to network 27 and an amplifier 30. The first transforming unit *13* further comprises a switch 29. Line 31 carries a square wave signal fed to the first transforming unit *13*. This signal has very steep edges (short duration) which are determinative of the commencing and finishing times of the display in a certain colour; the rising edge appears as soon as the relatively long rise time of the video signal has elapsed, while the falling edge appears before the video signal changes. Since only the commencing and finishing times of the square wave signals are of importance, the signal is differentiated in the RC network 27 after passing through amplifier 30. Network 27 also comprises the inductive coupling to change the reference voltage for the differentiated signal; the differentiated square wave signal defined with respect to the first reference voltage is to be converted into a signal defined with respect to the second reference voltage. In bistable circuit 28 the differentiated square wave is again converted to a pure square wave signal now defined with respect to the second reference voltage. This square wave signal controls switch 29.

With the presence of the rising edge of the square wave signal, i.e. the instant of commencing the display of video signals in a certain colour, switch 29 is set to the position as indicated in the figure. At this instant the amplifier 16 is fed with the video signals defined with respect to the second reference voltage. With the presence of the falling edge of the square wave, i.e. at the instant of finishing the display of video signals in a certain colour, switch 29 is set to the other position, to supply the amplifier 16 with the second reference voltage.

It is preferred to use a difference amplifier for amplifier 16, the reason being as follows. The acceleration of the electrons in the cathode ray tube is determined by the anode-cathode voltage, and not by the deflection voltage. Variations in the cathode voltage through the video signals displayed in the different colours result in positional errors in the display on the screen. These positional errors may be limited by allowing the voltage across grid 6 to change with the aforementioned variations in the cathode voltage. Further corrections of the positional errors are to be made in the deflection voltage.

It should finally be noted that inductive couplings are employed in the first and second transforming units, whereas in general electrically isolated couplings could have been used; as substitute for couplings 20 and 26, reference is made to the use of optoelectronic couplers.

## Claim

Power supply circuit for applying a rapidly varying high voltage to a penetron-type cathode ray tube (1) for a colour display system, comprising a first voltage generator (2) for supplying a constant high voltage to the anode, a second voltage generator (4) for producing a voltage varying in magnitude with the different colours, which voltage after being modulated with the video signals to be displayed is applied to the cathode (5) of the tube (1), a first transforming unit (13) having first transforming means (20, 23, 24) for converting the video signals defined with respect to a first reference voltage into video signals defined with respect to the voltage varying in magnitude with the different colours and functioning as second reference voltage; a second transforming unit (17) for converting a supply voltage defined with respect to the first reference voltage into a supply voltage defined with respect to the second reference voltage; and a supply unit (19) for deriving from the supply voltage defined with respect to the second reference voltage the supply voltages needed to process the video signals defined with respect to the second reference voltage and to display said video signals on the cathode ray tube, characterised in that the first transforming unit (13) comprises second transforming means (26, 27, 28, 30) for converting a square-wave voltage, being determinative of the start and the end of displays in a certain colour and being defined with respect to the first reference voltage, into a square-wave voltage defined with respect to the second reference voltage, and further comprises a switch (29) for passing to the cathode (5) either the second reference voltage or, depending on said latter square-wave voltage, the video signals defined with respect to the second reference voltage.

**Patentanspruch**

Spannungsversorgungsschaltung für das Anlegen einer sich rasch in Wert ändernden Hochspannung an eine Kathodenstrahlröhre vom Penetrontyp (1) für ein Farbbildschirmsystem, versehen mit einem ersten Spannungsgenerator (2), mit dem an die Anode eine konstante Spannung angelegt wird und einem zweiten Spannungsgenerator (4), mit dem eine mit den verschiedenen Farben sich in Wert ändernde Spannung erhalten wird, welche, nach Modulierung mit den darzustellenden Videosignalen, an die Kathode (5) der Kathodenstrahlröhre (1) angelegt wird, und weiterhin versehen mit einer ersten die ersten Transformationsmittel (20, 23, 24) umfassenden Transformationseinheit (13), mit dem Zweck die hinsichtlich einer ersten Bezugsspannung definierten Videosignale in hinsichtlich der genannten — und als zweite Bezugsspannung fungierenden — und mit den verschiedenen Farben sich in Wert ändernden Spannung definierte Videosignale zu transformieren; einer zweiten Transformationseinheit (17), mit dem Zweck eine hinsichtlich der ersten Bezugsspannung definierte Speisespannung in eine hinsichtlich der zweiten Bezugsspannung definierten Speisespannung zu transformieren; sowie einer Speiseeinheit (19), mit dem Zweck aus der zuletztgenannten hinsichtlich der zweiten Bezugsspannung definierten Speisespannung die für die Verarbeitung der hinsichtlich der zweiten Bezugsspannung definierten Videosignale und die Darstellung dieser Signale auf der Kathodenstrahlröhre benötigten Speisespannungen herzuleiten, dadurch gekennzeichnet, dass die erste Transformationseinheit (13) versehen ist mit zweiten Transformationsmitteln (26, 27, 28, 30) zur Umwandlung einer Rechteckspannung, welche bestimmend ist für Anfang und Ende von Abbildungen in einer gewissen Farbe und hinsichtlich der ersten Bezugsspannung definiert, in eine hinsichtlich der zweiten Bezugsspannung definierte Rechteckspannung, sowie einem Schalter (29), welcher abhängig von der letztgenannten Rechteckspannung entweder die zweite Bezugsspannung oder die hinsichtlich der zweiten Bezugsspannung definierten Videosignale zur Kathode (5) der Kathodenstrahlröhre (1) durchlässt.

**Revendication**

Circuit d'alimentation de puissance destiné à appliquer une tension élevée à variations rapides à un tube à rayons cathodiques de type à pénétrons (1) pour système de visualisation en couleurs, comprenant un premier générateur de tension (2) destiné à fournir à l'anode une tension élevée constante, un second générateur de tension (4) destiné à engendrer une tension dont l'amplitude varie avec les différentes couleurs, tension qui après avoir été modulée par les signaux vidéo à visualiser, est appliquée à la cathode (5) du tube (1), une première unité de transformation (13) comportant des premiers moyens de transformation (20, 23, 24) pour convertir les signaux vidéo définis par rapport à une première tension de référence en signaux vidéo définis par rapport à la tension dont l'amplitude varie avec les différentes couleurs, et tenant lieu de seconde tension de référence; une seconde unité de transformation (17) pour convertir une tension d'alimentation définie par rapport à la première tension de référence en une tension d'alimentation définie par rapport à la seconde tension de référence; et une unité d'alimentation (19) destinée à dériver de la tension d'alimentation définie par rapport à la seconde tension de référence les tensions d'alimentation nécessaires pour traiter les signaux vidéo définis par rapport à la seconde tension de référence, et pour afficher lesdits signaux vidéo sur le tube à rayons cathodiques, caractérisé en ce que la première unité de transformation (13) comprend des seconds moyens de transformation (26, 27, 28, 30) pour convertir une tension de forme d'onde rectangulaire, qui détermine le début et la fin des affichages d'une certaine couleur, et qui est définie par rapport à la première tension de référence, en une tension de forme d'onde rectangulaire définie par rapport à la seconde tension de référence, et comprend en outre un commutateur (29) pour acheminer vers la cathode (5) soit la seconde tension de référence, soit, selon cette dernière tension de forme d'onde rectangulaire, les signaux vidéo définis par rapport à la seconde tension de référence.